# EUROPEAN PATENT SPECIFICATION

(11) **EP 3 961 327 B1**
(45) Date of publication and mention of the grant of the patent: **01.11.2023**
(21) Application number: 20193181.3
(22) Date of filing: 27.08.2020
(51) Int. Cl.: G05B 19/418, G06Q 10/06, G06Q 50/04, G06N 20/20

(54) **ASSEMBLY ASSISTANCE DEVICE AND METHOD**
MONTAGEUNTERSTÜTZUNGSVORRICHTUNG UND -VERFAHREN
PROCÉDÉ ET DISPOSITIF D'AIDE À L'ASSEMBLAGE

(43) Date of publication of application: 02.03.2022
(73) Proprietor: Omron Europe B.V., 2132 JD Hoofddorp (NL)
(72) Inventor: STELLAS, Antonis, 5234 GM 's-Hertogenbosch (NL)
(74) Representative: Horn Kleimann Waitzhofer Patentanwälte PartG mbB

(56) References cited:
- WO-A1-2019/243798
- DE-A1- 4 127 809
- US-A1- 2018 180 085
- US-B1- 10 481 579
- JONG HUN PARK ET AL: "A FRAMEWORK FOR THE EVALUATION AND SELECTION OF ASSEMBLY PLANS", PROCEEDINGS OF THE INTERNATIONAL CONFERENCE ON INDUSTRIAL ELECTRONICS, CONTROL AND INSTRUMENTATION (IECON). KOBE, OCT. 28 - NOV. 1, 1991; [PROCEEDINGS OF THE INTERNATIONAL CONFERENCE ON INDUSTRIAL ELECTRONICS, CONTROL AND INSTRUMENTATION (IECON)], NE, vol. 2 OF 03, 28 October 1991 (1991-10-28) , pages 1215-1220, XP000313432, ISBN: 978-0-87942-688-0
- NAJJARI H ET AL: "INTEGRATED SENSOR-BASED CONTROL SYSTEM FOR A FLEXIBLE ASSEMBLY CELL", MECHATRONICS, PERGAMON PRESS, OXFORD, GB, vol. 7, no. 3, 1 April 1997 (1997-04-01), pages 231-262, XP000656643, ISSN: 0957-4158, DOI: 10.1016/S0957-4158(96)00048-7

## Description

The present invention relates to an assembly assistance device for providing a user or an assembly device with an assembly instruction set. Further, the present invention relates to an assembly device and to a method for providing an assembly instruction set.

In the industrial context, it is common to assemble multiple components into a product. The assembly process can be performed by a user, by a user assisted by an assembling device (as for example described in EP 3 647 890 A1) or autonomously by an assembling device. In order to correctly assemble the components into the product, the user and/or the assembling device may follow an assembly instruction set defining a sequence of assembly steps of the assembly process. It can be desirable to improve or optimize the assembly instruction set.

In this regard, US 2019/0236472 A1 suggests observing actual measurement data of two workpieces to be assembled. The actual measurement data is used to construct an estimation model based on machine learning to estimate future assembly parameters. Accordingly, subsequent assembly steps are adapted.

US 2018/0027218 A1 discloses a work assistance device which optimizes the working time of a worker by storing different instructions for different users. Further, US 2019/0163428 A1 discloses a manufacturing assistance device which determines whether a preprogrammed assembly step is finished.

US 10 481 579 B1 discloses an Artificial Intelligence Process Control (AIPC) for automatically detecting errors in a manufacturing workflow of an assembly line process, and performing error mitigation through the update of instructions or guidance given to assembly operators at various stations. The technology can utilize one or more machine-learning models to perform error detection and/or propagate instructions/assembly modifications necessary to rectify detected errors or to improve the product of manufacture.

US 2018/180085 A1 discloses a machine learning device including a state observation unit for observing state variables that include at least one of the state of an assembly constituted of first and second components, an assembly time and information on a force, the result of a continuity test on the assembly, and at least one of position and posture command values for at least one of the first and second components and direction, speed and force command values for an assembly operation; and a learning unit for learning, in a related manner, at least one of the state of the assembly, the assembly time and the information on the force, the result of the continuity test on the assembly, and at least one of the position and posture command values for at least one of the first and second components and the direction, speed and force command values for the assembly operation.

It is one object of the present invention to provide an improved assembly assistance device.

Accordingly, an assembly assistance device for providing a user and/or an assembling device with an assembly instruction set is provided, the assembly instruction set defining a sequence of assembly steps of an assembly process according to which the user and/or the assembling device is configured to assemble components into a product. The assembly assistance device comprises:
a generation device configured to generate a plurality of preliminary instruction sets based on product data indicating a type and amount of at least some of the components to be assembled into the product, each preliminary instruction set defining a different assembly process for assembling the components into the product;
a sensor device configured to measure sensor data characterizing the assembly process of the components into the product according to each respective preliminary instruction set from the plurality of preliminary instruction sets;
an assistance device configured to use an artificial intelligence method to analyze an amount of resources required to assemble the components into the product according to each respective preliminary instruction set based on the sensor data and to generate an optimized assembly instruction set based on the preliminary instruction sets and the corresponding analysis of the required amount of resources such that an amount of resources required when assembling the product according to the optimized assembly instruction set is reduced and
an input device for receiving input data indicating a state of the user, the state of the user including the user's gender, age, job position, size, fitness level, potential handicaps, experience in product assembly and/or tiredness, wherein the assistance device is configured to determine the optimized assembly instruction set based on the input data, wherein the assistance device is configured to determine an optimized assembly instruction set for different settings corresponding to the input data, wherein each optimized assembly instruction set is determined such that for the corresponding setting, the amount of resources required when assembling the product according to the optimized assembly instruction set is reduced.

The assembly assistance device learns optimal assembly strategies for a product. The assembly assistance device allows the generation of an optimized assembly instruction set, which can be used to reach higher efficiency in product assembly. In particular, using the optimized assembly instruction set, products are assembled faster and with fewer mistakes than with other assembly instruction sets.

The product to be assembled may be any product with multiple components, such as a processor, a computer, a car, an electric circuit, a piece of furniture, parts of the previous cited elements or the like. The components can be any type of elements, and in particular include mechanical parts, electrical elements and/or chemicals. The assembly of the components into the product can include steps such as screwing, gluing, clipping, welding, stacking, mixing, soldering and the like.

In order to assemble the components into the product, there may be multiple possible assembly processes defined by the assembly instruction sets. In particular, the assembly instruction sets for example define an order of assembly of the components, which assembling elements (screws, glue, solder and the like) are used and/or quantities thereof, whether multiple components are assembled simultaneously, how a user's hand or a tool should be positioned to assemble the components and/or how the components should be positioned to be assembled. Different assembly instruction sets can be permutations of individual assembly steps for assembling the components into the product. The assembly instruction sets can be thought of as recipes to assemble the components into the product. The optimized assembly instruction set and the preliminary instruction sets are assembly instruction sets.

The assembly device may autonomously assemble the components into the product based on the assembly instruction set. The assembly device can be a robot, for example an industrial robot, or an assembly machine. The assembly instruction sets can be provided as a program to the assembly device. If provided to a human user, the assembly instructions can be provided in an understandable language such as "place screw X into hole Y of component Z".

The generation device can create new assembly instruction sets. The generation device may generate the preliminary instruction sets autonomously. The preliminary instruction sets are generated based on product data, which for example include constraints for building the product, constraints of the components, properties of the components, a list of the available components and the like.

The preliminary instruction sets may then be tested by assembling components in accordance with the different preliminary instruction sets. In particular, one of several product assemblies are performed for each preliminary instruction set. Meanwhile, the sensor device may observe these assemblies by measuring sensor data characterizing each of the assembly processes. In other words, the sensor device can collect data relating to each preliminary instruction set.

The assistance device uses the sensor data and the preliminary instruction sets in an artificial intelligence algorithm to generate an optimized assembly instruction set based thereon. The assistance device may use the artificial intelligence algorithm to find patterns between the preliminary instruction sets and the resources (training). Based on these patterns, the artificial intelligence algorithm analyses the quality of the individual preliminary instruction sets by analyzing the amount of resources necessary for a particular preliminary instruction set based on the sensor data measured by the sensor device for a product assembled according to this preliminary instruction set. For example, analyzed resources can be how long it takes to assemble the product and how many errors are made. Based on the analyzed amount of resources, the assistance device determines the optimized assembly instruction set.

The generation device, the sensor device and the assistance device may be used to each respectively operate one mode of the assembly assistance device. In particular, the three devices (and the three modes) are not directly intertwined. This in particular means that they each receive different inputs and outputs. Further, the three devices (modes) are each optimized to perform their own task only. Separating the tasks of the assembly assistance device in three parts corresponding to the three devices is optimal in view of resource optimization, performance and/or communication of the assembly assistance device. In detail, each of the three devices may utilize different resources (CPU, power, input/output operations, processing speed and the like), perform different usage of the resources and a different model. For example, the generation device may use a digital twin to create preliminary instruction sets while the assistance device may use an industrial PC. In other word, the generation device, the sensor device and the assistance device may be part of different (in particular separated) computer entities.

To create an optimized assembly instruction set, the generated preliminary instruction sets and the sensor data preferably satisfy high requirements regarding diversity, quantity and quality. Diversity in particular means that preliminary instruction sets are varied and greatly distinguish from one another. Quantity in particular means that many assembly processes using the preliminary instructions sets should be observed to obtain large quantities of sensor data. Quality in particular means that the information regarding the preliminary instruction sets and the sensor data is correct and should not comprise any mistakes.

The generation device, the sensor device and the assistance device can be provided as hardware and/or software entities. The instruction sets (preliminary instruction sets and optimized assembly instruction set) can be either generated in a machine-readable format and/or in a human (user) readable format. In the human-readable format, the instruction sets can include text elements, image elements and/or video elements. Further, machine-readable instruction sets can be converted into human-readable instruction sets prior to outputting the instruction sets in order to output human-readable instructions sets to the user.

According to an embodiment, the assistance device is configured to generate the optimized assembly instruction set by selecting a selected preliminary instruction set from the plurality of preliminary instruction sets as the optimized assembly instruction set, in particular by selecting the preliminary instruction set which requires the smallest amount of resources when compared to all other preliminary instruction sets from the plurality of preliminary instruction sets.

In particular, the optimized assembly instruction set is the preliminary instruction set which minimizes one or multiple resources as determined by the assistance device most.

The optimized assembly instruction set may also be the preliminary instruction set which provides the best compromise between several resources. In particular, the assistance device may determine the optimized assembly instruction set as the preliminary instruction set which requires less than a first amount of a first resource, less than a second amount of a second resource and so on.

According to a further embodiment, the generation device is configured to generate the preliminary instruction sets by putting individual assembly steps from different former preliminary instruction sets together to form a new preliminary instruction set. In particular, the preliminary instruction set can be built by combining different elements of different previous preliminary instruction sets.

According to a further embodiment, the assistance device further comprises an output device for outputting the optimized assembly instruction set to the user and/or the assembling device.

If the output device outputs the optimized assembly instruction set to the user, it may be a screen, a loudspeaker, a projector or the like. If the output device outputs the optimized assembly instruction set to the assistance device, it may be an interface such as a USB port or the like for connecting to the assistance device and transferring the optimized assembly instruction set.

According to a further embodiment, the sensor device is configured to measure further sensor data characterizing an assembly of the components according to the optimized assembly instruction set and the assistance device is configured to update the optimized assembly instruction set based on the further sensor data collected by the sensor device.

The sensor data may further characterize an input data (described further below). The sensor device and the assistance device may repeatedly and/or continuously be used to update the optimized assembly instruction set. The assembly assistance device thereby learns optimal assembly strategies for a product over time. Advantageously, the optimized assembly instruction set may be improved and/or optimized more and more over time, in particular dynamically, based on the measurement of additional sensor data with the sensor device and the corresponding analysis by the assistance device. The more the assembly assistance device is used, the better the optimized assembly instruction set may become.

According to a further embodiment, the generation device is configured to generate an additional preliminary assembly instruction set, the sensor device is configured to collect additional sensor data characterizing an assembly of the components according to the additional preliminary instruction sets and the assistance device is configured to update the optimized assembly instruction set based on the additional preliminary assembly instruction set and on the additional sensor data collected by the sensor device.

The optimized assembly instruction set may be optimized or improved even further by repeatedly and/or continuously generating further preliminary instruction sets using the generation device, observing the preliminary instruction sets using the sensor device and generating a new optimized assembly instruction set using the assistance device. The generated additional preliminary assembly instruction set(s) can be generated based on the optimized assembly instruction set and/or based on previously obtained and/or analyzed sensor data. The more the assembly assistance device is used, the better the optimized assembly instruction set may become.

According to a further embodiment, the artificial intelligence method includes a machine learning method. Examples for the artificial intelligence method include neural network algorithms, decision trees and/or reinforced learning algorithms. The artificial intelligence method may further use a statistical method.

According to a further embodiment, the sensor data collected by the sensor device is an image, a video and/or a duration of one or multiple steps of the assembly of the components according to each respective preliminary instruction set from the plurality of preliminary instruction sets. The sensor device may include a camera, a video camera, a chronometer or the like.

According to a further embodiment, the resources include: an assembly time for assembling the product, an amount of electrical energy required to assembly the product, an amount of components and/or raw materials required to assemble the product and/or a number of errors made when assembling the product.

In other words, the resources can be any quantity that allows determining whether a preliminary instruction set is performant or not. The lower the required resource is, the better the preliminary instruction set.

The optimized assembly instruction set may be adjusted to a current condition of the user, thereby increasing the efficiency and reliability of the assembly even further. For example, a user who is tired may get a simpler optimized assembly instruction set (even if the assembly time is longer overall), allowing him to reduce his number of errors as compared to a more complex assembly instruction set (with a shorter assembly time).

In particular, for each possible input data category (such as "very tired", "a little tired", "not tired" or "apprentice", "experienced worker"), a different setting of the optimized assembly instruction set is generated and stored by the assistance device. When provided with the input data, the assistance device provides the user with the optimized assembly instruction set setting corresponding to the input data.

According to a further embodiment, the assembly assistance device comprises a database device for storing the preliminary instruction sets from the generation device in conjunction with their respective sensor data from the sensor device.

In particular, the database device is accessible by the generation device, the sensor device and the assistance device. It provides information about the entire assembly instruction optimization process, which can be used to train new assembly instruction devices, for example. In particular, sensor data relating to each assembly step (for different preliminary instruction sets and the optimized assembly instruction set) may be stored in the database device. The generation device, the sensor device and the assistance device may merely be connected to each other via the database device. In particular, any form of (indirect) communication between the three devices may be performed through retrieving data from and storing data to the database device.

According to a further embodiment, the generation device is configured to generate the plurality of preliminary instruction sets based on data describing previously observed assemblies, based on instructions input by a user, and/or randomly.

In particular, the generation device can generate the preliminary instruction sets by following observed assemblies (based on product data corresponding to observations made on previous and/or different assembly processes). The generation of the preliminary instruction sets can also be performed using a simulator, a digital twin or the like. In the case of random generation, the number of steps and the exact instructions at each assembly step can be randomly selected from prestored product data.

According to a further embodiment, the generation device can be configured to generate the plurality of preliminary instruction sets using a reinforcement learning algorithm.

In this reinforcement learning algorithm, the generation device may receive a list of available resources, available components and/or existing instruction sets. Based on sensor data observed during the generation of the instruction set, a negative reward is assigned for high cost of available resources while a positive reward is assigned for a high diversity of generated instruction sets.

An assembling device including the claimed assembly assistance device or according to an embodiment thereof is provided. The assembling device is configured to perform the assembly according to each of the plurality of preliminary assembly instruction sets and according to the optimized assembly instruction set.

The embodiments and features described with reference to the claimed assembly assistance device or according to an embodiment thereof apply mutatis mutandis to the assembling device.

According to an embodiment, the assembling device is a pick-to-beamer device comprising a plurality of storage devices for holding the components and a projector device for projecting assembly instructions according to the optimized assembly instruction set on the pick-to-beamer device.

The pick-to-beamer device is an assembling device which assists the user in assembling the product. An example of a pick-to-beamer device is shown in EP 3 647 890 A1.

Further, a method for providing a user and/or an assembling device with an assembly instruction set is provided, the assembly instruction set defining steps of an assembly process according to which the user and/or the assembling device is configured to assemble components into a product. The method comprises:
generating a plurality of preliminary instruction sets based on product data indicating a type and amount of at least some of the components to be assembled into the product, each preliminary instruction set defining a different assembly process for assembling the components into the product;
measuring sensor data characterizing the assembly process of the components into the product according to each respective preliminary instruction set from the plurality of preliminary instruction sets;
using an artificial intelligence method to analyze an amount of resources required to assemble the components into the product according to each respective preliminary instruction set based on the sensor data and to generate an optimized assembly instruction set based on the preliminary instruction sets and the corresponding analysis of the required amount of resources such that an amount of resources required when assembling the product according to the optimized assembly instruction set is reduced; and
receiving input data indicating a state of the user, the state of the user including the user's gender, age, job position, size, fitness level, potential handicaps, experience in product assembly and/or tiredness, wherein the optimized assembly instruction set is determined based on the input data, wherein an optimized assembly instruction set is determined for different settings corresponding to the input data, wherein each optimized assembly instruction set is determined such that for the corresponding setting, the amount of resources required when assembling the product according to the optimized assembly instruction set is reduced.

The embodiments and features described with reference to the assembly assistance device or according to an embodiment thereof apply mutatis mutandis to the method.

According to an embodiment, the method of the third aspect is executed on the assembly assistance device according to the first aspect or according to an embodiment thereof.

According to a further embodiment, the steps of generating, measuring and using an artificial intelligence method are repeatedly performed.

The method can be embodied as a computer program product comprising instructions which, when the program is executed by a computer, cause the computer to carry out the above-described method or according to an embodiment thereof.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Embodiments, features and advantages of the present invention will become apparent from the subsequent description and dependent claims, taken in conjunction with the accompanying drawings, in which:
- Fig. 1: shows an assembly assistance device according to a first embodiment;
- Fig. 2: shows an example of an assembling device used by a user;
- Fig. 3: shows a method for providing an assembly instruction set;
- Fig. 4: shows an example for preliminary instruction sets;
- Fig. 5: shows an example of product data;
- Fig. 6: shows an assembly assistance device according to a second embodiment;
- Fig. 7: shows the generation of preliminary instructions sets (step S 1) in detail;
- Fig. 8: shows the measurement of sensor data (step S2) in detail;
- Fig. 9: shows the generation of the optimized assembly instruction set (step S3) in detail;
- Fig. 10: shows an interaction between the devices from the assembly assistance device and the assembling device;
- Fig. 11: shows an assembly assistance system; and
- Fig. 12: shows an example of a decision tree generated by the assistance device.

In the Figures, like reference numerals designate like or functionally equivalent elements, unless otherwise indicated.

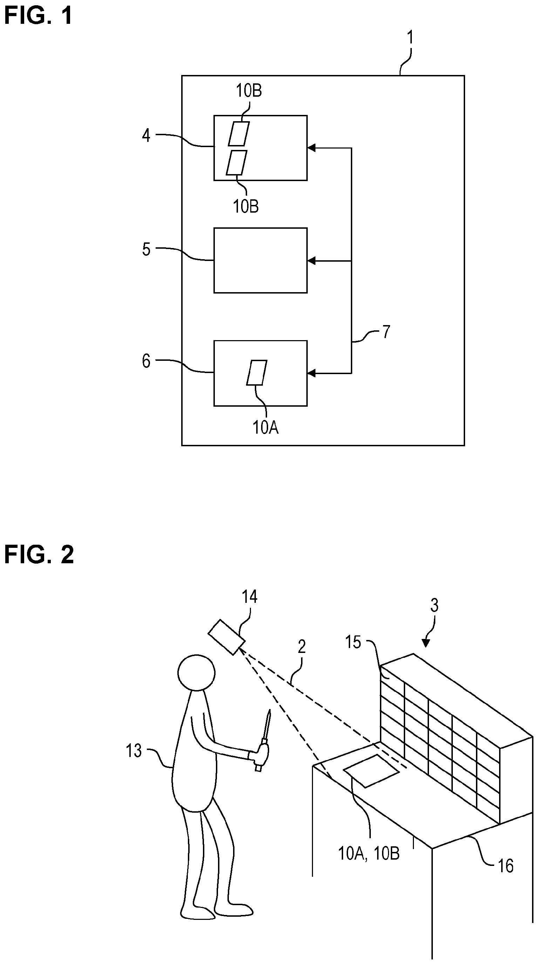

Fig. 1 shows an assembly assistance device 1 according to a first embodiment. The assembly assistance device 1 includes a generation device 4, a sensor device 5 and an assistance device 6. The generation device 4, the sensor device 5 and the assistance device 6 communicate with each other via a communication channel 7.

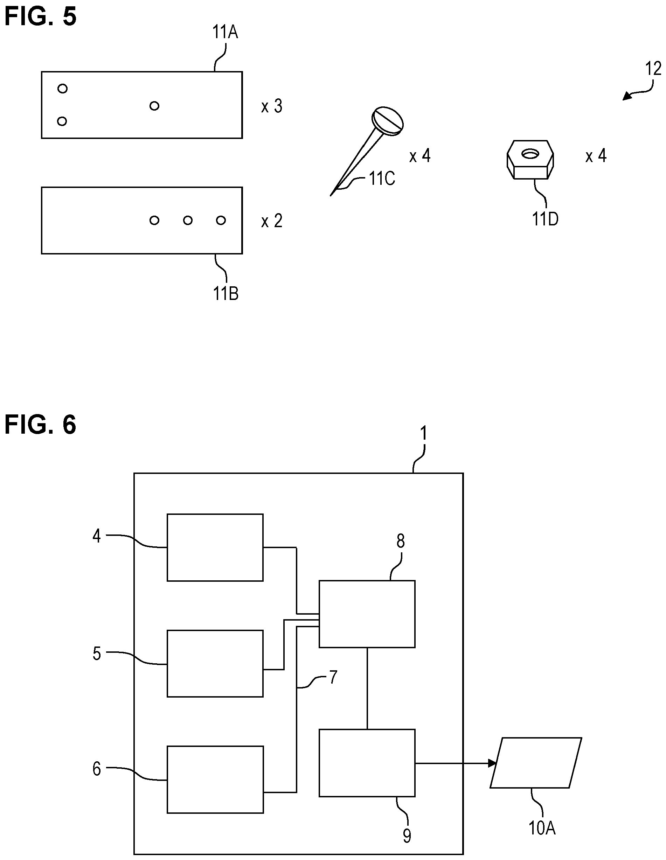

The assembly assistance device 1 is configured to provide a user 13 and an assembling device 3 (shown in Fig. 2) with an assembly instruction set 10A, 10B. In the example of Fig. 2, the assembling device 3 is a pick-to-beamer device. Such a pick-to-beamer device 3 is a workbench including storage devices 15 formed as compartments for holding components 11A- 11D shown in Fig. 5 and a work table 16 for assembling the components 11A - 11D into a product by the user 13. The pick-to-beamer device 3 includes a projector 14 for projecting the assembly instruction set 10A, 10B provided by the assembly instruction device 1 in a user-readable format step by step onto the work table 16 using light beams 2. In the user-readable format, the projected instruction set 10A, 10B includes a text, an image and/or a video. Thereby, the user 13 gets the assembly instructions 10A, 10B projected step by step and can accordingly assemble the components 11A - 11D into the product.

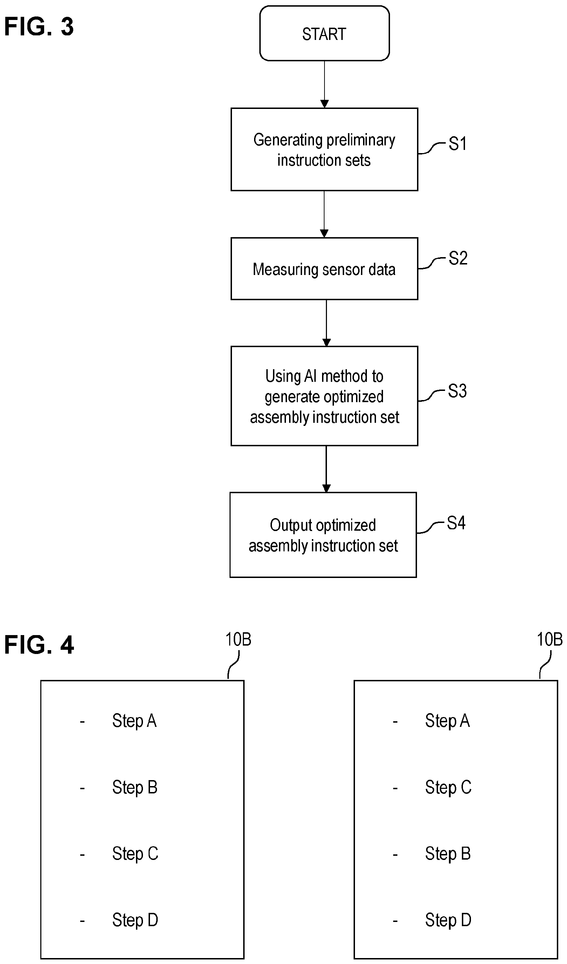

In order to generate the assembly instruction set 10A, 10B, the assembly assistance device 1 of Fig. 1 may follow the method shown in Fig. 3, which shows a method for providing an assembly instruction set. In the following, the functionalities of the generation device 4, the sensor device 5 and the assistance device 6 of Fig. 1 will be described in conjunction with Fig. 3.

In a step S 1, the generation device 4 generates preliminary instruction sets 10B. The preliminary instructions sets 10B are assembly instruction sets. Fig. 4 shows an example with two such preliminary instruction sets 10B. The preliminary instruction sets 10B both comprise four assembly steps labelled A - D. The only difference between the two instruction sets 10B is the order in which the steps B and C are performed. Although not shown in Fig. 4, the preliminary instruction sets 10B further include information about each assembly step A - D. In particular, the information about each assembly step A - D for example includes which components 11A - 11D are assembled, how they are held and positioned with respect to each other, and/or which fixing means are used (screw, glue or the like).

In order to generate the preliminary instruction sets 10B, the generation device 4 takes into account product data 12 retrieved from a database device 8 (described further below) or received from the user 13. Such product data 12 is for example shown in Fig. 5. In Fig. 5, the product data 12 includes a listing of all components 11A - 11D available, including their amount, as well as an indication on the final product to be assembled (not shown in Fig. 5). Components 11A and 11B are metal sheets with through-holes at different locations. Component 11C is a screw and component 11D is a corresponding nut.

In a step S2, the sensor device 5 measures sensor data characterizing the assembly process of the components 11A - 11D into the product according to each respective preliminary instruction set 10B generated by the generation device 4. In other words, the respective preliminary instruction sets 10B generated by the generation device 4 are tested by the user 13, who assembles the components 11A - 11D according to the respective preliminary instruction sets 10B projected onto the pick-to-beamer 3. Meanwhile, the sensor device 5 observes the assembly procedure.

To this end, the sensor device 5 includes a video camera which films the assembly procedure. The sensor device 5 may optionally be equipped with an analysis tool for analyzing the filmed assembly process, in particular for cutting it into sections corresponding to different assembly steps, measuring a time taken for each assembly step and/or recognizing errors in each assembly step. The sensor device 5 may store the processed or unprocessed sensor data in a database device (described further below). It is particularly advantageous to store analyzed data as text data or as a table to reduce a required storage capacity. The sensor device 5 may store the sensor data in a classified manner (for example, using labels or appropriate file names) to facilitate analysis of the sensor data. Preferably, the assembly process using each preliminary instruction set 10B is performed multiple time in order to obtain a large and representative amount of sensor data.

In a step S3, the assistance device 6 generates an optimized assembly instruction set 10A using an artificial intelligence method which is here a machine learning method. To this end, the assistance device 6 first gathers the sensor data from the sensor device 5 and analyses it to determine which preliminary instruction sets 10B gave particularly good product assembly results regarding an assembly time, a number of assembly errors and/or an assembly quality. These indicators of the product assembly result are expressed as an amount of resources.

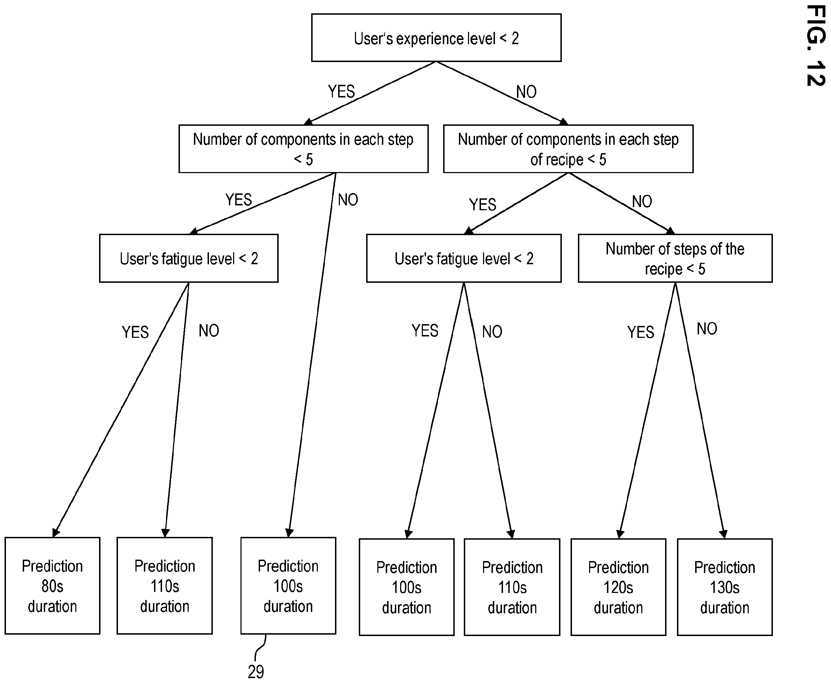

Based on the amount of resources required for each preliminary instruction set, the assistance device 6 generates the optimized assembly instruction set 10A. Usually, the optimized assembly instruction set 10A is one of the preliminary instruction sets 10B generated by the generation device 10B. In this case, the optimized assembly instruction set 10A is the preliminary assembly instruction set which shows the best results regarding the amount of resources and reduces an overall use of resources (shorter assembly time, less errors and the like). Fig. 12 (described below) shows an example of a decision tree used to select/generate the optimized assembly instruction set 10A.

In a step S4 (optional), the assembly assistance device 1 outputs the optimized assembly instruction set 10A. For example, the optimized assembly instruction set 10A is transmitted wirelessly to the projector 14 for projecting the optimized assembly instruction set 10A step after step onto the pick-to-beamer 3 for the user 13 to accordingly assemble the components 11A - 11D into the product.

To facilitate the outputting of the optimized assembly instruction set 10A and of the preliminary instruction sets 10B, the assembly assistance device 1 can further comprise an output device 9. Such an assembly assistance device 1 is shown in Fig. 6. The assembly assistance device 1 of Fig. 6 further includes a database device 8 for respectively storing input and output data of the generation device 4, the sensor device 5 and the assistance device 6. The database device 8 may be a remotely accessible cloud storage or the like. The database device 8 in particular stores the preliminary instruction sets 10B, the sensor data, the product data 12, the optimized assembly instruction set 10A and the like. The assembly assistance device 1 of Fig. 6 is equally configured to perform the method of Fig. 3.

Steps S2 and S3 or steps S1, S2 and S3 can be iteratively and repeatedly performed such as to increase the amount of analyzed data and optimized the optimized assembly instruction set 10A even further.

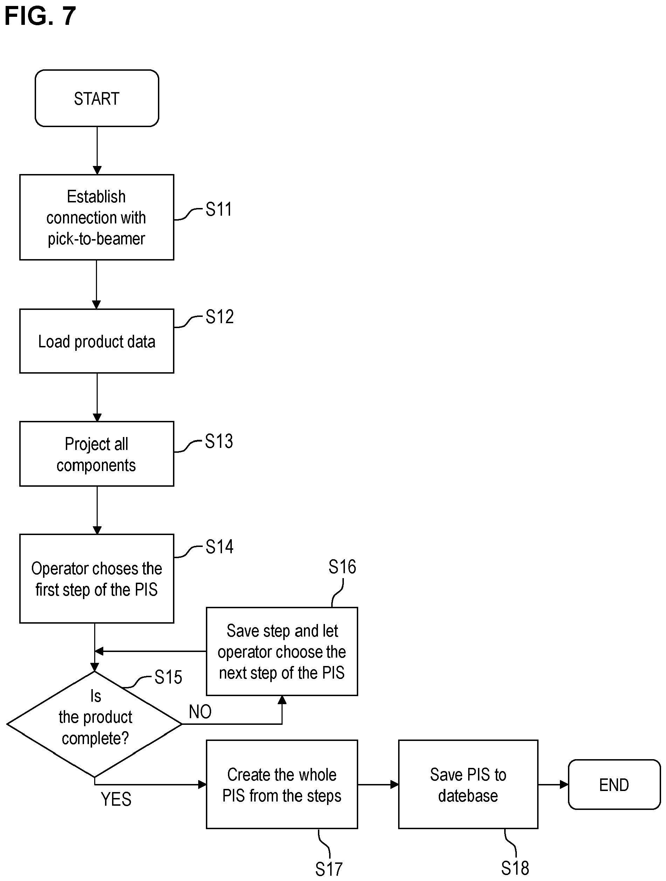

Fig. 7 shows the generation of preliminary instructions sets (step S1) in greater detail. Steps S11 to S18 of Fig. 7 are all performed by or using the generation device 4.

In step S11, the generation device 4 establishes a communicative connection with the pick-to-beamer 3, for example using the communication channel 7. In a step S12, the generation device 4 loads the product data 12 from the database device 8. In step S13, the generation device 4 sends a list of all components 11A - 11D, which is obtained from the product data 12, to the pick-to-beamer 3, which projects the list of components 11A - 11D using the projector 14.

In step S14, the user (operator) 13 selects a first assembly step of a first preliminary instruction set 10B ("PIS" in Fig. 7). To this end, the user 13 may use a computer and/or a touch screen. In step S15, it is determined whether the assembly step(s) selected in step S14 allow assembling the entire product or not. If not ("NO" in step S15), the current step (from step S14) is stored and the user chooses the subsequent assembly step (S16). Steps S15 and S16 are repeated until completion of the product ("YES" in S15), which results in the creation of a whole preliminary instruction set 10B (S17), which is then saved in the database device 8 (S18).

The method of Fig. 7 can be repeated to determine multiple preliminary instruction sets 10B. Alternatively or in conjunction to the method of Fig. 7, the generation device 4 may generate preliminary instruction sets 10B entirely or partly autonomously, for example randomly or based on reinforcement learning.

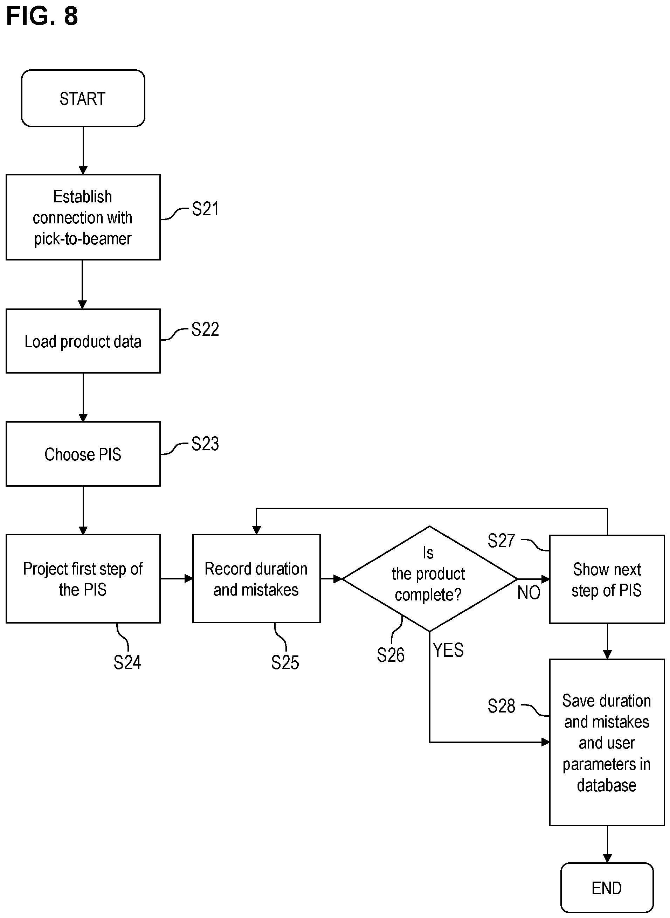

Fig. 8 shows the measuring of sensor data (step S2) in greater detail. Steps S21 to S28 of Fig. 8 are all performed by or using the sensor device 5. In step S21, the sensor device 5 establishes a communicative connection with the pick-to-beamer 3, for example using the communication channel 7. In a step S22, the sensor device 5 loads the product data 12 from the database device 8 to be able to classify the sensor data, for example.

In step S23, the sensor device 5 chooses one of the preliminary instruction sets 10B. When generating the preliminary instruction sets 10B, it is possible that the generation device 4 generates a same preliminary instruction set 10B multiple times. In this case, the probability of the preliminary instruction set 10B generated multiple times as being good (in terms of reduced resources) is already increased and it satisfies an initial statistical significance requirement. Such a preliminary instruction set 10B is preferably considered and chosen in step S33.

In step S24, the sensor device 5 sends the first assembly step of the preliminary assembly instruction 10B selected in step S23 to the pick-to-beamer 3, which projects this assembly step using the projector 14. In step S25, the sensor device 5 observes the assembly of the components 11A -11D according to the projected assembly step and records an assembly duration and potential errors.

In step S26, the sensor device 5 determines whether the entire product has been assembled. If not ("NO" in step S26), the next assembly step is projected (S27) and corresponding sensor data is captured (S26). Once the product is completed ("YES" in step S26), the measured sensor data is stored in the database (S28). The sensor data is here stored together with input data input by the user 13 and indicating a state of the user 13, such as his tiredness, how long he has been working on product assembly, and the like. Further, in step S28, the statistical significance of the measured preliminary instruction set 10B can be updated based on the sensor data.

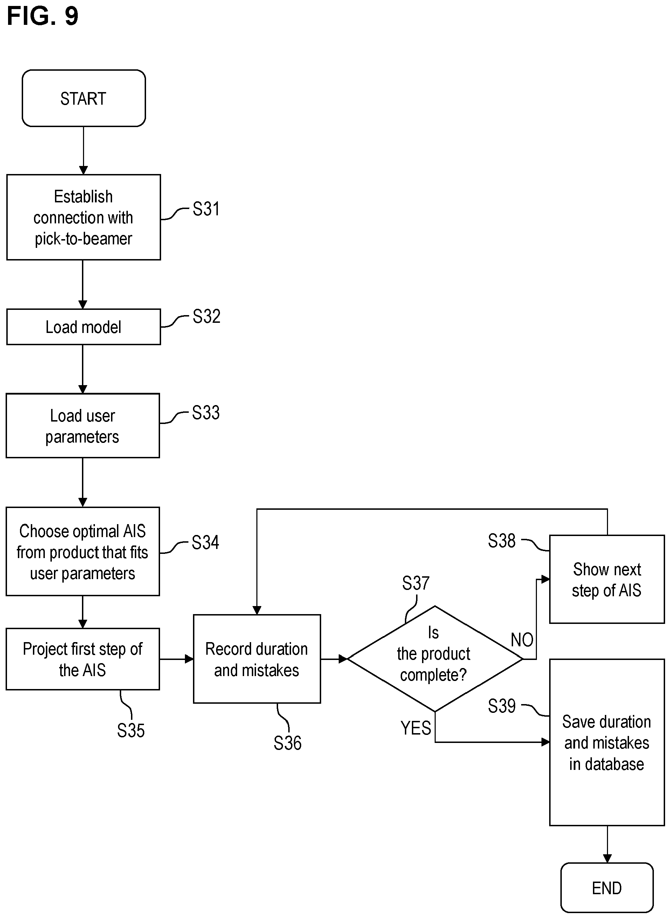

Fig. 9 shows the generation of the optimized assembly instruction set 10A by the assistance device 6 in greater detail. Steps S31 to S39 of Fig. 9 are all performed by or using the assistance device 6. In step S31, the assistance device 6 establishes a communicative connection with the pick-to-beamer 3, for example using the communication channel 7.

In a step S32, the trained assistance device model is loaded. This included retrieving the sensor data and the preliminary instruction sets 10B from the database device 8. In a step S33, the assistance device 6 loads user parameters ("input data") from a current user 13.

In a step S34, the assistance device 6 determines which preliminary instruction set 10B is best for the current user 13 using the artificial intelligence method and based on the criteria described above. This selected preliminary instruction set 10B is the optimized assembly instruction set 10A.

In step S35, the assistance device 6 sends the first assembly step of the optimized assembly instruction set 10A selected in step S34 to the pick-to-beamer 3, which projects the assembly step using the projector 14. In step S36, the sensor device 5 observes the assembly of the components 11A -11D according to the projected assembly step and records an assembly duration and potential errors.

In step S37, the assistance device 6 determines whether the entire product has been assembled. If not ("NO" in step S37), the next assembly step is projected (S38) and corresponding sensor data is captured (S36). Once the product is completed ("YES" in step S37), the measured sensor data is stored in the database (S39). This allows improving the optimized assembly instruction set 10A.

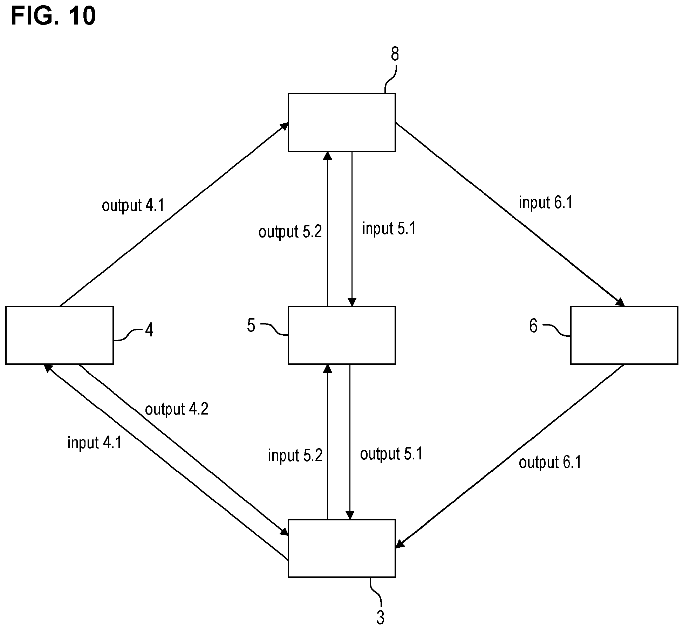

Fig. 10 shows an interaction between the database device 8, the pick-to-beamer 3 and the generation device 4, the sensor device 5 and the assistance device 6. As shown in Fig. 10, the generation device 4, the sensor device 5 and the assistance device 6 do not directly communicate with each other. Rather, they are only linked through the database device 8 and the pick-to-beamer 3, thereby optimizing resources used by the generation device 4, the sensor device 5 and the assistance device 6.

In Fig. 10, input 4.1 of the generation device 4 designates a new assembly instruction set received from the pick-to-beamer 3, output 4.2 from the generation device 4 designates the projection of all components 11A- 11D on the pick-to-beamer and output 4.1 from the generation device 4 designates a generated preliminary instruction set to be stored in the database device 8.

Further, input 5.1 and output 5.1 of the sensor device 5 comprise a preliminary instruction set 10B to be measured and input 5.2 and output 5.2 comprise a corresponding sensor data. Moreover, input 6.1 of the generation device 6 is the reception of the sensor data from the database device 8 and output 6.1 is the provision of the optimized assembly instruction set 10A to the pick-to-beamer. Since all the inputs and output of Fig. 10 have been previously described, we refer to the above for a more detailed description.

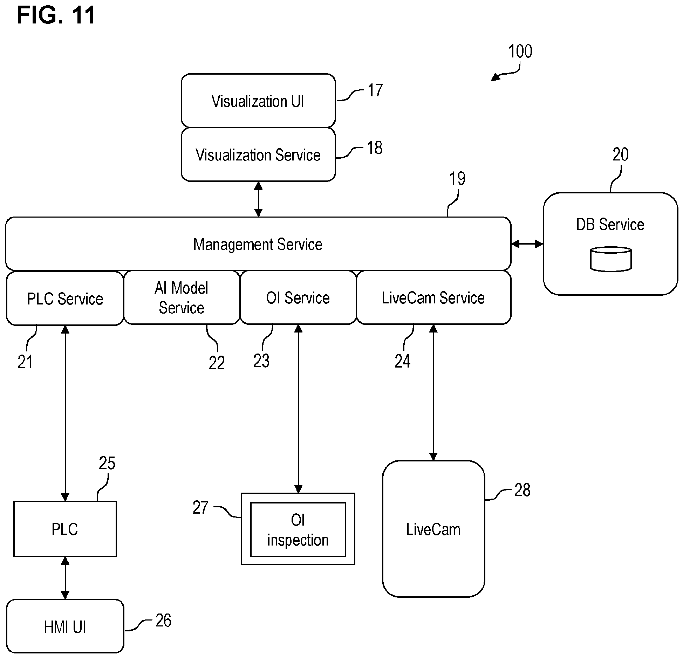

Fig. 11 shows an assembly assistance system 100. This assembly assistance system 100 includes a visualization user interface 17, a visualization service 18, a management service 12, a database (DB) service 20, a programmable logic controller (PLC) service 21, an AI model service 22 including the generation device 4, the sensor device 5 and the assistance device 6, an optical inspection (OI) service 23, a live camera (LiveCam) service 24, a PLC 25, a human machine interface user interface (HMI UI) 26, an OI inspection 27 and a live camera 28. The database service 20 corresponds to the above-described database device 8 and is used by the generation device 4, the sensor device 5 and the assistance device 6 to store and use data. The HMI UI 26 is used to select the mode (generation device 4, sensor device 5 or assistance device 6) by a user 13.

In the generation step S 1, the following units of the assembly assistance system 100 are used. When there is no user 13 to generate the preliminary instruction sets 10B, a digital twin device (not shown) using a trained reinforcement algorithm generates new preliminary instruction sets 10B. The OI inspection 27 verifies whether the generated preliminary instruction sets 10B are correct. The DB service 20 stores the preliminary instruction sets 10B.

When there is a user 13 creating a preliminary instruction set 10B, the generation device 4 uses the LiveCam 28 and the LiveCam service 24 to track the creation of the preliminary instruction set 10B by the user 13. The HMI UI 26 can be used by the user 13 to indicate steps of the created preliminary instruction set 10B. The OI inspection 27 verifies whether the generated preliminary instruction sets 10B are correct. The DB service 20 stores the preliminary instruction sets 10B.

In the sensor data measurement step S2, the following units of the assembly assistance system 100 are used. A selected preliminary instruction set 10B is drawn from the DB service 20. The LiveCam 28 or the HMI UI 26 gets as an input the input data (user characteristics) or characteristics of the robots. The LiveCam 28 records assembly events. The OI inspection 27 determines whether the preliminary instruction set 10B is correct based on the recording by the LiveCam 28. The assembly events are stored in the DB service 20.

In the assistance step S3, the following units of the assembly assistance system 100 are used. The LiveCam 28 or the HMI UI 26 get as an input the input data (user characteristics) or characteristics of the robots. Using the model stored in the DB service 20 in step S2, the optimal assembly instruction set 10A is determined. The LiveCam 28 records assembly events following the optimal assembly instruction set 10A. The OI inspection 27 determines whether the optimized assembly instruction set 10A is correct based on the recording by the LiveCam 28. The assembly events are stored in the DB service 20.

Fig. 12 shows an example of a decision tree generated by the assistance device 6 in step S3, from which the assistance device 6 then selects the optimized assembly instruction set 10A. In the example of Fig. 12, the instruction sets 10A, 10B are characterized by the number of components 11A - 11D in the instruction set 10A, 10B and by the number of steps in the instruction set 10A, 10B. The input data characterizing the user 13 includes the user's experience and his fatigue. In steps S1 and S2 leading to the decision tree of Fig. 12, preliminary instruction sets 10B were generated and sensor data was collected.

In step S3, a model (here a decision tree) is trained. Thereby, an assembly duration for the different configurations (number of components 11A - 11D, number of steps in the instruction set 10A, 10B, user's experience and user's fatigue) can be predicted (bottom line of the decision tree of Fig. 12). Each route (indicated by the arrows in Fig. 12) of the decision tree is associated with a corresponding preliminary instruction set 10A which satisfies the rules. The routes indicated by the decision tree can be used to determine an optimal assembly instruction set 10A which reduces the assembly duration most.

The optimal assembly instruction set 10A for a user 13 is determined based on the input data indicating the state of the user 13 (experience level and fatigue) by following the corresponding path (route) in the decision tree. For example, if a user 13 has an experience level above two and if there are less than five components 11A - 11D in each step, the decision tree follows the path from the top of the decision tree to the box 29 labeled "prediction: 100s duration". A corresponding optimal instruction set 10B can be derived therefrom.

Although the present invention has been described in accordance with preferred embodiments, it is obvious for the person skilled in the art that modifications are possible in all embodiments. For example, the type and number of components 11A - 11D can depart from those shown in Fig. 5. The number and content of the assembly instruction sets 10A, 10B may vary. Instead of being assembled by a user 13 assisted by a pick-to-beamer 3, the user 13 may be assisted by a different type of assembling device 3 or the components may be assembled into the product partly or entirely autonomously, for example using a robot the like. The algorithms used for generating the preliminary instruction sets 10B and the optimized assembly instruction set 10A are not limited to the above. For example, the preliminary instruction sets 10B can be issued randomly.

### REFERENCE NUMERALS

- 1: assembly assistance device
- 2: light beam/projection
- 3: assembling device
- 4: generation device
- 5: sensor device
- 6: assistance device
- 7: communication channel
- 8: database device
- 9: output device
- 10A: optimized assembly instruction set
- 10B: preliminary assembly instruction set
- 11A - 11D: component
- 12: product data
- 13: user
- 14: projector
- 15: storage device
- 16: work table
- 17: visualization user interface
- 18: visualization service
- 19: management service
- 20: database service
- 21: PLC service
- 22: AI model service
- 23: optical inspection service
- 24: live camera service
- 25: PLC
- 26: HMI user interface
- 27: optical inspection
- 28: live camera
- 29: box
- 100: system
- S 1 - S39: method steps

## Claims

1. An assembly assistance device (1) for providing a user (13) and/or an assembling device (3) with an assembly instruction set, the assembly instruction set defining a sequence of assembly steps of an assembly process according to which the user (13) and/or the assembling device (3) is configured to assemble components (11A - 11D) into a product, the assembly assistance device (1) comprising:
a generation device (4) configured to generate a plurality of preliminary instruction sets (10B) based on product data (12) indicating a type and amount of at least some of the components (11A - 11D) to be assembled into the product, each preliminary instruction set (10B) defining a different assembly process for assembling the components (11A - 11D) into the product;
a sensor device (5) configured to measure sensor data characterizing the assembly process of the components (11A- 11D) into the product according to each respective preliminary instruction set (10B) from the plurality of preliminary instruction sets (10B);
an assistance device (6) configured to use an artificial intelligence method to analyze an amount of resources required to assemble the components (11A - 11D) into the product according to each respective preliminary instruction set (10B) based on the sensor data and to generate an optimized assembly instruction set (10A) based on the preliminary instruction sets (10B) and the corresponding analysis of the required amount of resources such that an amount of resources required when assembling the product according to the optimized assembly instruction set (10A) is reduced; and
an input device for receiving input data indicating a state of the user (13), the state of the user (13) including the user's gender, age, job position, size, fitness level, potential handicaps, experience in product assembly and/or tiredness, wherein the assistance device (6) is configured to determine the optimized assembly instruction set (10A) based on the input data, wherein the assistance device (6) is configured to determine an optimized assembly instruction set (10A) for different settings corresponding to the input data, wherein each optimized assembly instruction set (10A) is determined such that for the corresponding setting, the amount of resources required when assembling the product according to the optimized assembly instruction set (10A) is reduced.

2. The assembly assistance device according to claim 1, wherein the assistance device (6) is configured to generate the optimized assembly instruction set (10A) by selecting a selected preliminary instruction set (10B) from the plurality of preliminary instruction sets (10B) as the optimized assembly instruction set (10A), in particular by selecting the preliminary instruction set (10B) which requires the smallest amount of resources when compared to all other preliminary instruction sets (10B) from the plurality of preliminary instruction sets (10B).

3. The assembly assistance device according to claim 1 or 2, further comprising an output device (9) for outputting the optimized assembly instruction set (10A) to the user (13) and/or the assembling device (3).

4. The assembly assistance device according to one of claims 1 to 3, wherein the sensor device (5) is configured to measure further sensor data characterizing an assembly of the components (11A- 11D) according to the optimized assembly instruction set (10A) and the assistance device (6) is configured to update the optimized assembly instruction set (10A) based on the further sensor data collected by the sensor device (5).

5. The assembly assistance device according to one of claims 1 to 4, wherein the generation device (4) is configured to generate an additional preliminary assembly instruction set, the sensor device (5) is configured to collect additional sensor data characterizing an assembly of the components (11A- 11D) according to the additional preliminary instruction sets (10B) and the assistance device (6) is configured to update the optimized assembly instruction set (10A) based on the additional preliminary assembly instruction set and on the additional sensor data collected by the sensor device (5).

6. The assembly assistance device according to one of claims 1 to 5, wherein the sensor data collected by the sensor device (5) is an image, a video and/or a duration of one or multiple steps of the assembly of the components (11A - 11D) according to each respective preliminary instruction set (10B) from the plurality of preliminary instruction sets (10B).

7. The assembly assistance device according to one of claims 1 to 6, wherein the resources include: an assembly time for assembling the product, an amount of electrical energy required to assembly the product, an amount of components (11A - 11D) and/or raw materials required to assemble the product and/or a number of errors made when assembling the product.

8. The assembly assistance device according to one of claims 1 to 7, further comprising a database device (8) for storing the preliminary instruction sets (10B) from the generation device (4) in conjunction with their respective sensor data from the sensor device (5).

9. The assembly assistance device according to one of claims 1 to 8, wherein the generation device (4) is configured to generate the plurality of preliminary instruction sets (10B) randomly, based on data describing previously observed assemblies and/or based on instructions input by a user (13).

10. An assembling device (3) including the assembly assistance device (1) according to one of claims 1 to 9, the assembling device (3) being configured to perform the assembly according to each of the plurality of preliminary assembly instruction sets and according to the optimized assembly instruction set (10A).

11. The assembling device according to claim 10, wherein the assembling device (3) is a pick-to-beamer device comprising a plurality of storage devices for holding the components (11A - 11D) and a projector device for projecting assembly instructions according to the optimized assembly instruction set (10A) on the pick-to-beamer device.

12. A method for providing a user (13) and/or an assembling device (3) with an assembly instruction set using the assembly assistance device (1) according to one of claims 1 to 9, the assembly instruction set defining steps of an assembly process according to which the user (13) and/or the assembling device (3) is configured to assemble components (11A - 11D) into a product, the method comprising:
generating (S1) a plurality of preliminary instruction sets (10B) based on product data (12) indicating a type and amount of at least some of the components (11A - 11D) to be assembled into the product, each preliminary instruction set (10B) defining a different assembly process for assembling the components (11A - 11D) into the product;
measuring (S2) sensor data characterizing the assembly process of the components (11A- 11D) into the product according to each respective preliminary instruction set (10B) from the plurality of preliminary instruction sets (10B);
using (S3) an artificial intelligence method to analyze an amount of resources required to assemble the components (11A - 11D) into the product according to each respective preliminary instruction set (10B) based on the sensor data and to generate an optimized assembly instruction set (10A) based on the preliminary instruction sets (10B) and the corresponding analysis of the required amount of resources such that an amount of resources required when assembling the product according to the optimized assembly instruction set (10A) is reduced; and
receiving input data indicating a state of the user (13), the state of the user (13) including the user's gender, age, job position, size, fitness level, potential handicaps, experience in product assembly and/or tiredness, wherein the optimized assembly instruction set (10A) is determined based on the input data, wherein an optimized assembly instruction set (10A) is determined for different settings corresponding to the input data, wherein each optimized assembly instruction set (10A) is determined such that for the corresponding setting, the amount of resources required when assembling the product according to the optimized assembly instruction set (10A) is reduced.

13. The method according to claim 12, wherein the steps of generating (S 1), measuring (S2) and using (S3) an artificial intelligence method are repeatedly performed.

## Patentansprüche

1. Montageunterstützungsvorrichtung (1) zum Bereitstellen eines Montageanweisungssatzes an einen Benutzer (13) und/oder eine Montagevorrichtung (3), wobei der Montageanweisungssatz eine Sequenz von Montageschritten eines Montageprozesses definiert, gemäß welchem der Benutzer (13) und/oder die Montagevorrichtung (3) Komponenten (11A-11D) zu einem Produkt montieren soll, wobei die Montageunterstützungsvorrichtung (1) Folgendes aufweist:
eine Erzeugungsvorrichtung (4), die eingerichtet ist, mehrere vorläufige Anweisungssätze (10B) basierend auf Produktdaten (12) zu erzeugen, die einen Typ und eine Menge von zumindest einigen der Komponenten (11A-11D) angeben, die zu dem Produkt montiert werden sollen, wobei jeder vorläufige Anweisungssatz (10B) einen unterschiedlichen Montageprozess zum Montieren der Komponenten (11A-11D) zu dem Produkt definiert;
eine Sensorvorrichtung (5), die eingerichtet ist, Sensordaten zu messen, die den Montageprozess der Komponenten (11A-11D) zu dem Produkt gemäß jedem jeweiligen vorläufigen Anweisungssatz (10B) aus den mehreren vorläufigen Anweisungssätzen (10B) charakterisieren;
eine Assistenzvorrichtung (6), die eingerichtet ist, ein künstliches Intelligenzverfahren zu verwenden, um eine Menge an Ressourcen zu analysieren, die erforderlich ist, um die Komponenten (11A-11D) zu dem Produkt gemäß der jeweiligen vorläufigen Anweisungssätze (10B) basierend auf den Sensordaten zu montieren, und einen optimierten Montageanweisungssatz (10A) basierend auf den vorläufigen Anweisungssätzen (10B) und der entsprechenden Analyse der erforderlichen Menge an Ressourcen zu erzeugen, so dass eine Menge an Ressourcen, die erforderlich ist, wenn das Produkt gemäß dem optimierten Montageanweisungssatz (10A) montiert wird, reduziert wird; und
eine Eingabevorrichtung zum Empfangen von Eingabedaten, die einen Zustand des Benutzers (13) angeben, wobei der Zustand des Benutzers (13) das Geschlecht, das Alter, die Arbeitsposition, die Größe, das Fitnessniveau, potentielle Handicaps, die Erfahrung bei der Produktmontage und/oder die Müdigkeit des Benutzers umfasst, wobei die Assistenzvorrichtung (6) eingerichtet ist, den optimierten Montageanweisungssatz (10A) basierend auf den Eingabedaten zu bestimmen, wobei die Assistenzvorrichtung (6) eingerichtet ist, einen optimierten Montageanweisungssatz (10A) für verschiedene Einstellungen zu bestimmen, die den Eingabedaten entsprechen, wobei jeder optimierte Montageanweisungssatz (10A) derart bestimmt wird, dass für die entsprechende Einstellung die Menge an Ressourcen, die erforderlich ist, wenn das Produkt gemäß dem optimierten Montageanweisungssatz (10A) montiert wird, reduziert wird.

2. Montageassistenzvorrichtung nach Anspruch 1, wobei die Assistenzvorrichtung (6) eingerichtet ist, den optimierten Montageanweisungssatz (10A) durch Auswählen eines ausgewählten vorläufigen Anweisungssatzes (10B) aus den mehreren vorläufigen Anweisungssätzen (10B) als den optimierten Montageanweisungssatz (10A) zu erzeugen, insbesondere durch Auswählen des vorläufigen Anweisungssatzes (10B), der die kleinste Menge an Ressourcen im Vergleich zu allen anderen vorläufigen Anweisungssätzen (10B) aus den mehreren vorläufigen Anweisungssätzen (10B) erfordert.

3. Montageassistenzvorrichtung nach Anspruch 1 oder 2, ferner aufweisend eine Ausgabevorrichtung (9) zum Ausgeben des optimierten Montageanweisungssatzes (10A) an den Benutzer (13) und/oder die Montagevorrichtung (3).

4. Montageassistenzvorrichtung nach einem der Ansprüche 1 bis 3, wobei die Sensorvorrichtung (5) eingerichtet ist, weitere Sensordaten zu messen, die eine Montage der Komponenten (11A-11D) gemäß dem optimierten Montageanweisungssatz (10A) charakterisieren, und die Assistenzvorrichtung (6) eingerichtet ist, den optimierten Montageanweisungssatz (10A) basierend auf den weiteren Sensordaten zu aktualisieren, die durch die Sensorvorrichtung (5) gesammelt werden.

5. Montageassistenzvorrichtung nach einem der Ansprüche 1 bis 4, wobei die Erzeugungsvorrichtung (4) eingerichtet ist, einen zusätzlichen vorläufigen Montageanweisungssatz zu erzeugen, die Sensorvorrichtung (5) eingerichtet ist, zusätzliche Sensordaten zu sammeln, die eine Montage der Komponenten (11A-11D) gemäß den zusätzlichen vorläufigen Anweisungssätzen (10B) charakterisieren, und die Assistenzvorrichtung (6) eingerichtet ist, den optimierten Montageanweisungssatz (10A) basierend auf dem zusätzlichen vorläufigen Montageanweisungssatz und auf den zusätzlichen Sensordaten zu aktualisieren, die durch die Sensorvorrichtung (5) gesammelt werden.

6. Montageassistenzvorrichtung nach einem der Ansprüche 1 bis 5, wobei die Sensordaten, die durch die Sensorvorrichtung (5) gesammelt werden, ein Bild, ein Video und/oder eine Dauer eines oder mehrerer Schritte der Montage der Komponenten (11A-11D) gemäß jedem jeweiligen vorläufigen Anweisungssatz (10B) aus den mehreren vorläufigen Anweisungssätzen (10B) sind.

7. Montageassistenzvorrichtung nach einem der Ansprüche 1 bis 6, wobei die Ressourcen Folgendes umfassen: eine Montagezeit zum Montieren des Produkts, eine Menge an elektrischer Energie, die zum Montieren des Produkts erforderlich ist, eine Menge an Komponenten (11A-11D) und/oder Rohmaterialien, die zum Montieren des Produkts erforderlich sind, und/oder eine Anzahl von Fehlern, die beim Montieren des Produkts gemacht werden.

8. Montageassistenzvorrichtung nach einem der Ansprüche 1 bis 7, ferner aufweisend eine Datenbankvorrichtung (8) zum Speichern der vorläufigen Anweisungssätze (10B) von der Erzeugungsvorrichtung (4) in Verbindung mit ihren jeweiligen Sensordaten von der Sensorvorrichtung (5).

9. Montageassistenzvorrichtung nach einem der Ansprüche 1 bis 8, wobei die Erzeugungsvorrichtung (4) eingerichtet ist, die mehreren vorläufigen Anweisungssätze (10B) zufällig zu erzeugen, basierend auf Daten, die zuvor beobachtete Montagen beschreiben, und/oder basierend auf Anweisungen, die durch einen Benutzer (13) eingegeben werden.

10. Montagevorrichtung (3), umfassend die Montageassistenzvorrichtung (1) nach einem der Ansprüche 1 bis 9, wobei die Montagevorrichtung (3) eingerichtet ist, die Montage gemäß jedem der mehreren vorläufigen Montageanweisungssätze und gemäß dem optimierten Montageanweisungssatz (10A) durchzuführen.

11. Montagevorrichtung nach Anspruch 10, wobei die Montagevorrichtung (3) eine Pick-to-Beamer-Vorrichtung ist, die mehrere Speichervorrichtungen zum Halten der Komponenten (11A-11D) und eine Projektorvorrichtung zum Projizieren von Montageanweisungen gemäß dem optimierten Montageanweisungssatz (10A) auf die Pick-to-Beamer-Vorrichtung aufweist.

12. Verfahren zum Bereitstellen eines Montageanweisungssatzes an einen Benutzer (13) und/oder eine Montagevorrichtung (3) unter Verwendung der Montageassistenzvorrichtung (1) nach einem der Ansprüche 1 bis 9, wobei der Montageanweisungssatz Schritte eines Montageprozesses definiert, gemäß welchem der Benutzer (13) und/oder die Montagevorrichtung (3) Komponenten (11A-11D) zu einem Produkt montieren soll, wobei das Verfahren Folgendes aufweist:
Erzeugen (S1) mehrerer vorläufiger Anweisungssätze (10B) basierend auf Produktdaten (12), die einen Typ und eine Menge von zumindest einigen der Komponenten (11A-11D) angeben, die zu dem Produkt montiert werden sollen, wobei jeder vorläufige Anweisungssatz (10B) einen unterschiedlichen Montageprozess zum Montieren der Komponenten (11A-11D) zu dem Produkt definiert;
Messen (S2) von Sensordaten, die den Montageprozess der Komponenten (11A-11D) zu dem Produkt gemäß jedem jeweiligen vorläufigen Anweisungssatz (10B) aus den mehreren vorläufigen Anweisungssätzen (10B) charakterisieren;
Verwenden (S3) eines künstlichen Intelligenzverfahrens, um eine Menge an Ressourcen zu analysieren, die erforderlich ist, um die Komponenten (11A-11D) zu dem Produkt gemäß jedem jeweiligen vorläufigen Anweisungssatz (10B) basierend auf den Sensordaten zu montieren, und einen optimierten Montageanweisungssatz (10A) basierend auf den vorläufigen Anweisungssätzen (10B) und der entsprechenden Analyse der erforderlichen Menge an Ressourcen zu erzeugen, so dass eine Menge an Ressourcen, die erforderlich ist, wenn das Produkt gemäß dem optimierten Montageanweisungssatz (10A) montiert wird, reduziert wird; und
Empfangen von Eingabedaten, die einen Zustand des Benutzers (13) angeben, wobei der Zustand des Benutzers (13) das Geschlecht, das Alter, die Arbeitsposition, die Größe, das Fitnessniveau, potentielle Handicaps, die Erfahrung bei der Produktmontage und/oder die Müdigkeit des Benutzers umfasst, wobei der optimierte Montageanweisungssatz (10A) basierend auf den Eingabedaten bestimmt wird, wobei ein optimierter Montageanweisungssatz (10A) für verschiedene Einstellungen bestimmt wird, die den Eingabedaten entsprechen, wobei jeder optimierte Montageanweisungssatz (10A) derart bestimmt wird, dass für die entsprechende Einstellung die Menge an Ressourcen, die erforderlich ist, wenn das Produkt gemäß dem optimierten Montageanweisungssatz (10A) montiert wird, reduziert wird.

13. Verfahren nach Anspruch 12, wobei die Schritte des Erzeugens (S1), Messens (S2) und Verwendens (S3) des künstlichen Intelligenzverfahrens wiederholt durchgeführt werden.

## Revendications

1. Dispositif d'assistance d'assemblage (1) pour fournir à un utilisateur (13) et/ou à un dispositif d'assemblage (3) un ensemble d'instructions d'assemblage, l'ensemble d'instructions d'assemblage définissant une séquence d'étapes d'assemblage d'un processus d'assemblage selon lequel l'utilisateur (13) et/ou le dispositif d'assemblage (3) est configuré pour assembler des composants (11A - 11D) en un produit, le dispositif d'assistance d'assemblage (1) comprenant :
un dispositif de génération (4) configuré pour générer une pluralité d'ensembles d'instructions préliminaires (10B) sur la base de données de produit (12) indiquant un type et une quantité d'au moins certains des composants (11A - 11D) à assembler en le produit, chaque ensemble d'instructions préliminaires (10B) définissant un processus d'assemblage différent pour assembler les composants (11A - 11D) en le produit ;
un dispositif de capteur (5) configuré pour mesurer des données de capteur caractérisant le processus d'assemblage des composants (11A - 11D) en le produit selon chaque ensemble d'instructions préliminaires (10B) respectif parmi la pluralité d'ensembles d'instructions préliminaires (10B) ;
un dispositif d'assistance (6) configuré pour utiliser un procédé d'intelligence artificielle pour analyser une quantité de ressources requises pour assembler les composants (11A - 11D) en le produit selon chaque ensemble d'instructions préliminaires (10B) respectif sur la base des données de capteur et pour générer un ensemble d'instructions d'assemblage optimisé (10A) sur la base des ensembles d'instructions préliminaires (10B) et de l'analyse correspondante de la quantité requise de ressources de sorte qu'une quantité de ressources requises lors de l'assemblage du produit selon l'ensemble d'instructions d'assemblage optimisé (10A) soit réduite ; et
un dispositif d'entrée pour recevoir des données d'entrée indiquant un état de l'utilisateur (13), l'état de l'utilisateur (13) incluant le sexe, l'âge, la position de travail, la taille, le niveau de forme physique, les handicaps potentiels, l'expérience dans l'assemblage de produit et/ou la fatigue de l'utilisateur, dans lequel le dispositif d'assistance (6) est configuré pour déterminer l'ensemble d'instructions d'assemblage optimisé (10A) sur la base des données d'entrée, dans lequel le dispositif d'assistance (6) est configuré pour déterminer un ensemble d'instructions d'assemblage optimisé (10A) pour différents réglages correspondant aux données d'entrée, dans lequel chaque ensemble d'instructions d'assemblage optimisé (10A) est déterminé de sorte que pour le réglage correspondant, la quantité de ressources requises lors de l'assemblage du produit selon l'ensemble d'instructions d'assemblage optimisé (10A) soit réduite.

2. Dispositif d'assistance d'assemblage selon la revendication 1, dans lequel le dispositif d'assistance (6) est configuré pour générer l'ensemble d'instructions d'assemblage optimisé (10A) en sélectionnant un ensemble d'instructions préliminaires (10B) sélectionné parmi la pluralité d'ensembles d'instructions préliminaires (10B) en tant qu'ensemble d'instructions d'assemblage optimisé (10A), en particulier en sélectionnant l'ensemble d'instructions préliminaires (10B) qui requiert la plus petite quantité de ressources par rapport à tous les autres ensembles d'instructions préliminaires (10B) parmi la pluralité d'ensembles d'instructions préliminaires (10B).

3. Dispositif d'assistance d'assemblage selon la revendication 1 ou 2, comprenant en outre un dispositif de sortie (9) pour délivrer l'ensemble d'instructions d'assemblage optimisé (10A) à l'utilisateur (13) et/ou au dispositif d'assemblage (3).

4. Dispositif d'assistance d'assemblage selon l'une des revendications 1 à 3, dans lequel le dispositif de capteur (5) est configuré pour mesurer des données de capteur supplémentaires caractérisant un assemblage des composants (11A - 11D) selon l'ensemble d'instructions d'assemblage optimisé (10A) et le dispositif d'assistance (6) est configuré pour mettre à jour l'ensemble d'instructions d'assemblage optimisé (10A) sur la base des données de capteur supplémentaires collectées par le dispositif de capteur (5).

5. Dispositif d'assistance d'assemblage selon l'une des revendications 1 à 4, dans lequel le dispositif de génération (4) est configuré pour générer un ensemble d'instructions d'assemblage préliminaire supplémentaire, le dispositif de capteur (5) est configuré pour collecter des données de capteur supplémentaires caractérisant un assemblage des composants (11A - 11D) selon les ensembles d'instructions préliminaires (10B) supplémentaires et le dispositif d'assistance (6) est configuré pour mettre à jour l'ensemble d'instructions d'assemblage optimisé (10A) sur la base de l'ensemble d'instructions d'assemblage préliminaire supplémentaire et des données de capteur supplémentaires collectées par le dispositif de capteur (5).

6. Dispositif d'assistance d'assemblage selon l'une des revendications 1 à 5, dans lequel les données de capteur collectées par le dispositif de capteur (5) sont une image, une vidéo et/ou une durée d'une ou plusieurs étapes de l'assemblage des composants (11A - 11D) selon chaque ensemble d'instructions préliminaires (10B) respectif parmi la pluralité d'ensembles d'instructions préliminaires (10B).

7. Dispositif d'assistance d'assemblage selon l'une des revendications 1 à 6, dans lequel les ressources comprennent : un temps d'assemblage pour assembler le produit, une quantité d'énergie électrique requise pour assembler le produit, une quantité de composants (11A - 11D) et/ou de matières premières requises pour assembler le produit et/ou un nombre d'erreurs commises lors de l'assemblage du produit.

8. Dispositif d'assistance d'assemblage selon l'une des revendications 1 à 7, comprenant en outre un dispositif de base de données (8) pour stocker les ensembles d'instructions préliminaires (10B) provenant du dispositif de génération (4) conjointement avec leurs données de capteur respectives provenant du dispositif de capteur (5).

9. Dispositif d'assistance d'assemblage selon l'une des revendications 1 à 8, dans lequel le dispositif de génération (4) est configuré pour générer la pluralité d'ensembles d'instructions préliminaires (10B) de manière aléatoire, sur la base de données décrivant des assemblages précédemment observés et/ou sur la base d'instructions entrées par un utilisateur (13).

10. Dispositif d'assemblage (3) comprenant le dispositif d'assistance d'assemblage (1) selon l'une des revendications 1 à 9, le dispositif d'assemblage (3) étant configuré pour effectuer l'assemblage selon chacun de la pluralité d'ensembles d'instructions d'assemblage préliminaires et selon l'ensemble d'instructions d'assemblage optimisé (10A).

11. Dispositif d'assemblage selon la revendication 10, dans lequel le dispositif d'assemblage (3) est un dispositif de lecture-projection comprenant une pluralité de dispositifs de stockage pour contenir les composants (11A - 11D) et un dispositif de projection pour projeter des instructions d'assemblage selon l'ensemble d'instructions d'assemblage optimisé (10A) sur le dispositif de lecture-projection.

12. Procédé pour fournir à un utilisateur (13) et/ou à un dispositif d'assemblage (3) un ensemble d'instructions d'assemblage en utilisant le dispositif d'assistance d'assemblage (1) selon l'une des revendications 1 à 9, l'ensemble d'instructions d'assemblage définissant des étapes d'un processus d'assemblage selon lequel l'utilisateur (13) et/ou le dispositif d'assemblage (3) est configuré pour assembler des composants (11A - 11D) en un produit, le procédé comprenant :
la génération (S 1) d'une pluralité d'ensembles d'instructions préliminaires (10B) sur la base de données de produit (12) indiquant un type et une quantité d'au moins certains des composants (11A - 11D) à assembler en le produit, chaque ensemble d'instructions préliminaires (10B) définissant un processus d'assemblage différent pour assembler les composants (11A - 11D) en le produit ;
la mesure (S2) de données de capteur caractérisant le processus d'assemblage des composants (11A - 11D) en le produit selon chaque ensemble d'instructions préliminaires (10B) respectif parmi la pluralité d'ensembles d'instructions préliminaires (10B) ;
l'utilisation (S3) d'un procédé d'intelligence artificielle pour analyser une quantité de ressources requises pour assembler les composants (11A - 11D) en le produit selon chaque ensemble d'instructions préliminaires (10B) respectif sur la base des données de capteur et pour générer un ensemble d'instructions d'assemblage optimisé (10A) sur la base des ensembles d'instructions préliminaires (10B) et de l'analyse correspondante de la quantité requise de ressources de sorte qu'une quantité de ressources requises lors de l'assemblage du produit selon l'ensemble d'instructions d'assemblage optimisé (10A) soit réduite ; et
la réception de données d'entrée indiquant un état de l'utilisateur (13), l'état de l'utilisateur (13) incluant le sexe, l'âge, la position de travail, la taille, le niveau de forme physique, les handicaps potentiels, l'expérience dans l'assemblage du produit et/ou la fatigue de l'utilisateur, dans lequel l'ensemble d'instructions d'assemblage optimisé (10A) est déterminé sur la base des données d'entrée, dans lequel un ensemble d'instructions d'assemblage optimisé (10A) est déterminé pour différents réglages correspondant aux données d'entrée, dans lequel chaque ensemble d'instructions d'assemblage optimisé (10A) est déterminé de sorte que pour le réglage correspondant, la quantité de ressources requises lors de l'assemblage du produit selon l'ensemble d'instructions d'assemblage optimisé (10A) soit réduite.

13. Procédé selon la revendication 12, dans lequel les étapes de génération (S1), de mesure (S2) et d'utilisation (S3) d'un procédé d'intelligence artificielle sont effectuées de manière répétée.
